# EUROPEAN PATENT APPLICATION

(11) **EP 4 628 236 A1**
(43) Date of publication of application: **08.10.2025**
(21) Application number: 23898111.2
(22) Date of filing: 03.11.2023
(51) Int. Cl.: B23F 13/02, B23F 13/06, B23F 11/00

(54) **APPARATUS AND METHOD FOR MACHINING WORM SHAFT OF DOUBLE ENVELOPING WORM GEAR**

(30) Priority: 30.11.2022 KR 20220163680
(71) Applicant: Khan STN Co.,Ltd., Changwon-si, Gyeongsangnam-do 51338 (KR)
(72) Inventor: YUN, Yong Seon, Changwon-si Gyeongsangnam-do 51643 (KR); KIM, Yong Hyun, Changwon-si Gyeongsangnam-do 51221 (KR); KU, Bon Saeng, Changwon-si Gyeongsangnam-do 51515 (KR)
(74) Representative: M. Zardi & Co S.A.
(86) International application number: PCT/KR2023/017470
(87) International publication number: WO 2024/117579

(57) **Abstract**

The present invention relates to an apparatus and a method for machining a worm shaft of a double enveloping worm gear composed of a double enveloping worm shaft and a worm wheel, and enables X-axis movement of the worm shaft, Y-axis and Z-axis movements of a worm machining cutter, A-axis rotation of the worm shaft, C-axis rotation of the cutter, and B-axis tilting of a saddle on which the cutter is provided, and thus can facilitate worm shaft machining.

## Description

### Technical Field

The present disclosure relates to an apparatus and a method for machining a worm shaft of a double enveloping worm gear. More particularly, the present disclosure relates to an apparatus and a method for machining a worm shaft of a double enveloping worm gear, the apparatus and the method being capable of facilitating a thread machining process of a worm shaft having an hourglass shape.

### Background Art

Conventionally, a power transmission system of a power transmission device mainly uses a gear having a tooth shape using an involute curve which is a trajectory drawn by an end of a thread when the thread wound on a cylindrical reel is unwound in a taut state.

Such a gear is a device having teeth formed on a circumference thereof and transferring a rotation or a power by engaging the gear between two or more shafts. When the gear is used, a power or a rotation is capable of being reliably transferred, and is capable of being transferred with an accurate angular velocity ratio.

Types of these gears include a spur gear, a helical gear, a bevel gear, a worm gear, and so on.

Particularly, the worm gear has a gear ratio significantly larger than a gear ratio of a general gear, and is a special gear in which an input direction and an output direction of a power are perpendicular to each other.

In a case of a power transmission device formed of the worm gear, a worm shaft has a rod shape, and a worm wheel in contact with teeth of the worm shaft has a disk shape. Furthermore, the teeth of the worm shaft are formed on a circumference of the worm shaft such that the teeth are spaced apart from each other, so that there is a problem that a mutual contact area between the teeth of the worm shaft and the worm wheel is reduced. That is, an engagement rate between the worm shaft and the worm wheel is reduced.

Such a conventional worm shaft and a conventional worm wheel have a narrow contact area of the teeth that are engaged with each other, and a pressure applied to the gear tooth is localized, so that the pressure is high and a torque is low, thereby having a reduced efficiency as a worm and a worm gear.

That is, there are problems that the efficiency of an output rotation force is reduced, the durability and life of the gear is reduced, the gear is vulnerable to shock, and noise and vibration are increased.

In order to solve the problems described above, a Hindley worm is known as an example of an hourglass-shaped worm shaft for the power transmission apparatus.

The hourglass-shaped worm shaft has an outer circumferential surface thereof curved, and the curved region of the hourglass-shaped worm shaft has a spiral groove. For example, teeth having a spiral shape is formed on the curved region of the hourglass-shaped worm shaft. Furthermore, since a worm wheel engaged with the hourglass-shaped worm shaft has a large number of teeth, an area supporting a pressure between teeth is larger than that of the common worm gear. Therefore, there is an advantage that the hourglass-shaped worm shaft reduces wearing of the gear and is capable of transferring a large power.

However, the conventional power transmission device uses such an hourglass-shaped worm gear in a limited manner, and there has been no attempt to use the hourglass-shaped worm gear with various types of gears by taking full advantage of the characteristics of the hourglass-shaped worm gear.

In addition, since the gear teeth of the conventional hourglass-shaped worm shaft is also formed in a convex shape tooth form, the gear teeth cannot be formed in a shape surrounded on a circumferential contact surface of the worm wheel, so that the contact ratio is reduced. Furthermore, since the conventional hourglass-shaped worm shaft has a narrow contact area, there are problems that a pressure applied to the gear is localized, the pressure is high, the torque is low, and the efficiency is reduced.

In addition, in order to machine such an hourglass-shaped worm gear, there is a problem that a conventional worm machining apparatus cannot automatically perform such as machining of a diameter that gradually increases from a central shaft to the outside, machining of a lead angle formed by each worm pitch, and so on.

In addition, when a central shaft is rotated and the machining is performed and even when the machining is mechanically controlled, there may be a problem that an error may occur due to a torque generated by a machine operation, which may cause slippage during cutting as a result of rotation.

As described above, there is an advantage that the hourglass-shaped worm gear has a high load capacity and a high efficiency power transmission with a higher torque carrying capacity. However, as described above, there are many problems in machining the hourglass-shaped worm gear with the conventional technology, and precise work cannot be performed, so that the development of the technology is urgent.

### Disclosure

### Technical Problem

Accordingly, the present disclosure has been made keeping in mind the above problems occurring in the related art, and an objective of the present disclosure is to provide an apparatus and a method for machining a worm shaft of a double enveloping worm gear, the apparatus and the method being capable of facilitating and precisely performing a machining process of the worm shaft of the double enveloping worm gear.

In addition, another objective of the present disclosure is to provide an apparatus and a method for machining a worm shaft of a double enveloping worm gear, the apparatus and the method being capable of realizing an X-axis movement of the worm shaft, a Y-axis movement and a Z-axis movement of a worm machining cutter, an A-axis rotation of the worm shaft, a C-axis rotation of the worm machining cutter, and a B-axis tilting of a saddle on which the worm machining cutter is mounted, thereby facilitating a machining process of the worm shaft.

In addition, still another objective of the present disclosure is to provide an apparatus and a method for machining a worm shaft of a double enveloping worm gear, the apparatus and the method being capable of realizing a removal of burrs by a plunging operation.

In addition, yet another objective of the present disclosure is to provide an apparatus and a method for machining a worm shaft of a double enveloping worm gear, the apparatus and the method being capable of realizing a formation of a lead angle on the worm shaft by performing a B-axis tilting of a saddle.

The objective that can be obtained from the present disclosure is not limited to the above-mentioned objective, and other objectives not mentioned herein will be clearly understood from the following description.

### Technical Solution

In order to achieve the objectives described above, according to the present disclosure, there is provided an apparatus for machining a worm shaft of a double enveloping worm gear formed of a worm wheel and the worm shaft having an hourglass shape, the apparatus including: an X-axis table provided with an A-axis spindle configured to rotate the worm shaft around an X-axis that is a longitudinal direction of the A-axis spindle, the X-axis table being provided with a support body being capable of being moved along an X-axis direction according to a length of the worm shaft; a saddle which includes a worm machining cutter mounted such that a cutter blade faces a cutting surface of the worm shaft and which includes a C-axis spindle configured to rotate the worm machining cutter around a Z-axis; a column provided such that a Z-axis direction movement of the saddle is capable of being realized; and a bed provided on a lower portion of each of the X-axis table and the column, the bed being provided such that an X-axis direction movement of the X-axis table and a Y-axis direction movement of the column are capable of being realized. In a situation in which a teeth number of the worm machining cutter is equal to a teeth number of the worm wheel, when the worm shaft and the worm machining cutter are rotated as the A-axis spindle and the C-axis spindle are rotated at a speed ratio determined according to a ratio of the teeth number of the worm machining cutter and the teeth number of the worm wheel, the column is moved forward in a Y-axis direction so that the worm machining cutter enters the worm shaft, and a tip diameter of the worm machining cutter enters up to a root diameter of the worm shaft, so that machining is started. Furthermore, the worm machining cutter is moved backward and upward as the column is moved backward in the Y-axis direction and the saddle is moved upward in a Z-axis direction, the worm machining cutter enters the worm shaft as the column is moved forward again in the Y-axis direction, and then machining of the worm shaft is performed as the saddle is moved downward in the Z-axis direction and the worm machining cutter is moved downward.

In addition, according to an exemplary aspect of the present disclosure, the saddle may further include a B-axis saddle block configured to be tilted around a Y-axis.

In addition, in order to achieve the objectives described above, according to the present disclosure, there is provided an apparatus for machining a worm shaft of a double enveloping worm gear formed of a worm wheel and the worm shaft having an hourglass shape, the apparatus including: an X-axis table provided with an A-axis spindle configured to rotate the worm shaft around an X-axis that is a longitudinal direction of the A-axis spindle, the X-axis table being provided with a support body being capable of being moved along an X-axis direction according to a length of the worm shaft; a saddle including a worm machining cutter mounted such that a cutter blade faces a cutting surface of the worm shaft, a C-axis spindle configured to rotate the worm machining cutter around a Z-axis, and a saddle block configured to be tilted around a Y-axis; a column provided such that a Z-axis direction movement of the saddle is capable of being realized; and a bed provided on a lower portion of each of the X-axis table and the column, the bed being provided such that an X-axis direction movement of the X-axis table and a Y-axis direction movement of the column are capable of being realized. In a situation in which a teeth number of the worm machining cutter is smaller than a teeth number of the worm wheel, when the worm shaft and the worm machining cutter are rotated as the A-axis spindle and the C-axis spindle are rotated at a speed ratio determined according to a ratio of the teeth number of the worm machining cutter and the teeth number of the worm wheel, the column is moved forward in a Y-axis direction so that the worm machining cutter enters the worm shaft, and a tip diameter of the worm machining cutter enters up to a root diameter of the worm shaft, so that machining is started. Furthermore, the worm shaft is moved along an X-axis at the same time as the X-axis table is moved along an X-axis direction, and the worm machining cutter is transferred along a circular arc formed along a center of a Pitch Circle Diameter (PCD) of the worm wheel and a center of a Pitch Circle Diameter (PCD) of the worm machining cutter, so that machining is performed. Furthermore, machining of the worm shaft is performed as the saddle is moved downward in a Z-axis direction and the worm machining cutter is moved downward. Furthermore, a rotation direction of the worm machining cutter and a transferring direction of the worm machining cutter may be the same direction or directions opposite to each other.

In addition, according to an exemplary aspect of the present disclosure, the X-axis table may include: a first transferring device connected to the support body and configured to move the support body along the X-axis; and a first encoder and a first linear scale that are capable of precisely controlling a movement of the support body.

In addition, according to an exemplary aspect of the present disclosure, the bed may include: a second transferring device connected to the X-axis table and configured to move the X-axis table along the X-axis; a second encoder and a second linear scale that are capable of precisely controlling a movement of the X-axis table; a third transferring device connected to the column and configured to move the column along the Y-axis; and a third encoder and a third linear scale that are capable of precisely controlling a movement of the column.

In addition, according to an exemplary aspect of the present disclosure, the column may include: a fourth transferring device connected to the saddle and configured to move the saddle along the Z-axis; and a fourth encoder and a fourth linear scale that are capable of precisely controlling a movement of the saddle.

In addition, in order to achieve the objectives described above, according to the present disclosure, there is provided a method for machining a worm shaft by using the apparatus for machining the worm shaft of the double enveloping worm gear, the method including: rotating the worm shaft and the worm machining cutter as the A-axis spindle and the C-axis spindle are rotated at a speed ratio determined according to a ratio of a teeth number of the worm machining cutter and a teeth number of the worm wheel; starting machining as the column is moved forward in a Y-axis direction so that the worm machining cutter enters the worm shaft and a tip diameter of the worm machining cutter enters up to a root diameter of the worm shaft; moving the worm machining cutter backward and upward as the column is moved backward in the Y-axis direction and the saddle is moved upward in a Z-axis direction; progressing the machining as the column is moved forward again in the Y-axis direction and the worm machining cutter enters the worm shaft; and progressing the machining as the saddle is moved downward in the Z-axis direction and the worm machining cutter is moved downward.

In addition, in order to achieve the objectives described above, according to the present disclosure, there is provided a method for machining a worm shaft by using the apparatus for machining the worm shaft of the double enveloping worm gear, the method including: rotating the worm shaft and the worm machining cutter as the A-axis spindle and the C-axis spindle are rotated at a speed ratio determined according to a ratio of a teeth number of the worm machining cutter and a teeth number of the worm wheel; starting machining as the column is moved forward in a Y-axis direction so that the worm machining cutter enters the worm shaft and a tip diameter of the worm machining cutter enters up to a root diameter of the worm shaft; progressing the machining as the X-axis table is moved in an X-axis direction and the worm shaft is moved along an X-axis so that the worm machining cutter is transferred along a circular arc formed along a center of a Pitch Circle Diameter (PCD) of the worm wheel and a center of a Pitch Circle Diameter (PCD) of the worm machining cutter; and progressing the machining as the column is moved downward in the Z-axis direction and the worm machining cutter is moved downward.

### Advantageous Effects

In the present disclosure according to the configuration described above, following effects may be realized.

There is an effect that machining of the worm shaft of the double enveloping worm gear may be conveniently and precisely performed.

That is, the worm shaft is capable of being rotated in the X-axis direction while the worm shaft is rotated in the X-axis direction and the A-axis, the cutter is capable of being moved in the Y-axis direction and the Z-axis direction while the cutter is rotated in the Y-axis and the C-axis direction in which the Y-axis direction is orthogonal to the X-axis direction, and the cutter is capable of being tilted around the B-axis in the direction orthogonal to the A-axis and the C-axis, so that the machining process of the worm shaft may be conveniently performed.

At this time, since the A-axis rotation, the X-axis movement, the C-axis rotation, and the Y-axis movement are capable of being synchronized and controlled, there is an effect that the worm shaft is capable of being conveniently machined according to the size of the cutter.

In addition, the burrs are capable of being conveniently removed as the plunging operation in the Z-axis direction is capable of being performed, and the lead angle of the worm shaft is capable of being set by performing the tilting operation around the B-axis, so that the precise machining according to the need may be conveniently performed.

### Description of Drawings

FIG. 1 is a perspective view illustrating an apparatus for machining a worm shaft of a double enveloping worm gear according to an exemplary embodiment of the present disclosure.
FIG. 2 is a simplified view illustrating an internal structure of an X-axis table, a bed, and a column of the apparatus for machining the worm shaft of the double enveloping worm gear according to an exemplary embodiment of the present disclosure.
FIG. 3 is a cross-sectional view illustrating a worm shaft and a worm machining cutter when the teeth number of the worm machining cutter is equal to the teeth number of a worm wheel in the apparatus for machining the worm shaft of the double enveloping worm gear according to an exemplary embodiment of the present disclosure.
FIG. 4 is a view illustrating a machining progress state in FIG. 3.
FIG. 5 is a cross-sectional view illustrating the worm shaft and the worm machining cutter when the teeth number of the worm machining cutter is smaller than the teeth number of the worm wheel in the apparatus for machining the worm shaft of the double enveloping worm gear according to an exemplary embodiment of the present disclosure.
FIG. 6 is a view illustrating a machining progress state in FIG. 5.

### <Description of Reference Numerals>

100: Apparatus for machining a worm shaft of a double enveloping worm gear
10: X-axis table
11: A-axis spindle
13: Support body
15: Chuck jaw
20: Worm machining cutter
30: Saddle
31: C-axis spindle
33: Saddle block
40: Column
50: Bed
61: Nut
62: Screw
63: Motor
64. Encoder
65: Coupling
67: Linear scale

### Mode for Invention

Hereinafter, an exemplary embodiment of the present disclosure will be described in detail with reference to the accompanying drawings. Advantages and features of the present disclosure and a method for achieving them will be apparent with reference to embodiments described below together with the attached drawings. In addition, the terms used herein are only for explaining embodiments and are not to be understood as limiting the inventive concept. The terms in a singular form in the specification also include plural forms unless otherwise specified, and the words indicating the direction in the description are for aiding understanding of the description and may be changed according to the viewpoint.

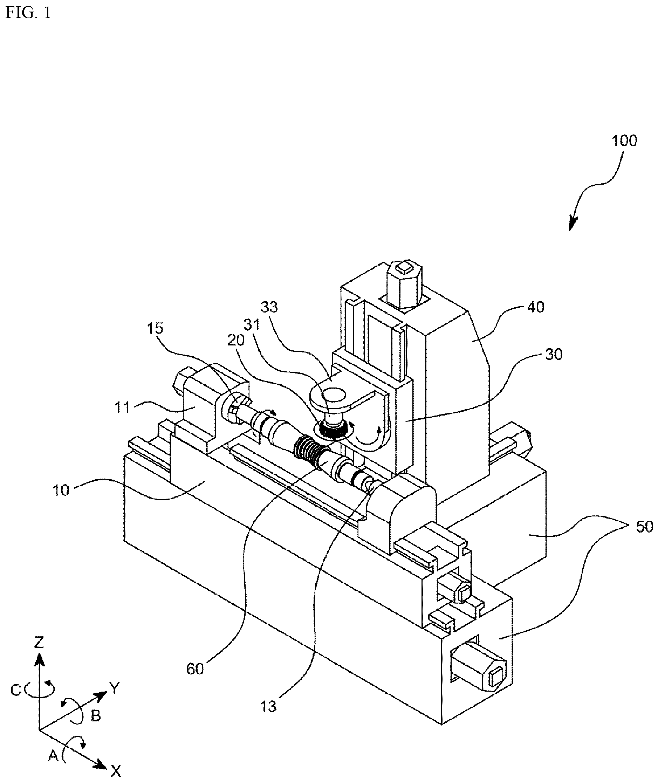

Hereinafter, an apparatus for machining a worm shaft of a double enveloping worm according to an exemplary embodiment of the present disclosure will be described in detail with reference to the accompanying drawings. FIG. 1 is a perspective view illustrating an apparatus for machining a worm shaft of a double enveloping worm gear according to an exemplary embodiment of the present disclosure.

An X-axis, a Y-axis, and a Z-axis are defined according to a coordinate illustrated in the drawing, an axis rotating (or tilting) around the X-axis is defined as an A-axis rotation axis, an axis rotating around the Y-axis is defined as a B-axis rotation axis, and an axis rotating around the Z-axis is defined as a C-axis rotation axis.

Referring to FIG. 1, an apparatus 100 for machining a worm shaft of a double enveloping worm gear according to the present disclosure is configured to rotate and move a worm shaft 60 and to machine the worm shaft 60 by using a cutter 33 configured to be rotated and moved, and includes an X-axis table 10, a worm machining cutter 20, a saddle 30, a column 40, and a bed 50.

The X-axis table 10 is configured to fix and rotate the worm shaft 60 to be machined. Furthermore, the X-axis table 10 includes an A-axis spindle 11 configured to rotate the worm shaft 60 around the X-axis that is a longitudinal direction of the A-axis spindle 11, and includes a support body 13 which is provided on the X-axis table 10 and which is capable of being moved in an X-axis direction according to a length of the worm shaft 60.

That is, the worm shaft 60 is rotated around the X-axis by the A-axis spindle 11, which is an A-axis rotation of the worm shaft 60. Here, the A-axis rotation is performed such that the A-axis rotation is in synchronization with a C-axis rotation, which will be described below.

In addition, the worm shaft 60 is fixed by the support body 13 and a chuck jaw 15. As illustrated in the drawing, a rotation force is provided to a first side of the worm shaft 60 by the A-axis spindle 11 while the first side of the worm shaft 60 is fixed by the chuck jaw 15, and a second side of the worm shaft 60 is rotated and fixed by a tailstock structure provided with the support body 13 supporting a center point of the worm shaft 60 that is rotated.

Here, the support body 13 is capable of performing an X-axis movement along a rail on the X-axis table 10, and the support body 13 fixes the worm shaft 60 by performing the X-axis movement along the rail according to the length of the worm shaft 60 to be machined.

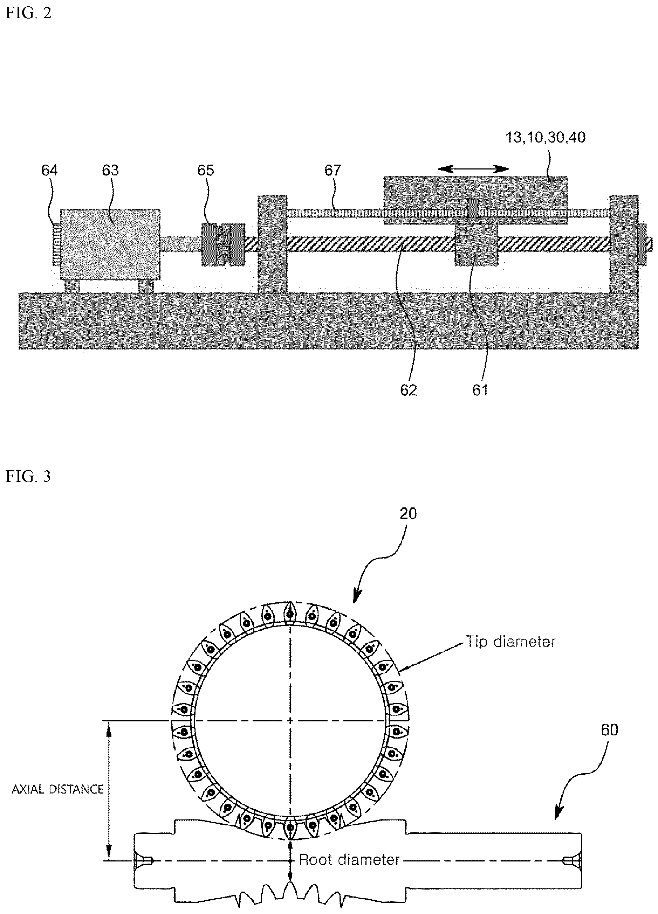

A first transferring device is provided for such an X-axis movement of the support body 13, and an example of such a first transferring device is illustrated in FIG. 2. FIG. 2 is a simplified view illustrating an internal structure of an X-axis table, a bed, and a column of the apparatus for machining the worm shaft of the double enveloping worm gear according to an exemplary embodiment of the present disclosure.

Referring to FIG. 2, the X-axis table 10 includes a nut 61 connected to the support body 13, a ball screw 62 connected to the nut 61 and configured such that the support body 13 is moved along the X-axis, a motor 63 configured to drive the ball screw 62, a coupling 65 connecting the ball screw 62 and the motor 63 to each other, and an encoder 64 and a linear scale 67 configured to measure a movement displacement of the support body 13 so as to realize precise control.

The first transferring device according to the present disclosure is not limited to the configuration described above. Furthermore, the configuration for the X-axis linear movement of the support body 13 may be realized in any form, and may not include the nut and the ball screw in the previously described configuration and may be driven by a linear motor.

Here, the linear scale 67 is a device configured to measure and feedback an X-axis movement amount of the support body 13. When the X-axis movement of the support body 13 is required, the encoder 64 and the motor 63 are driven, so that the support body 13 is moved by the ball screw 62 and the nut 61. Furthermore, the linear scale 67 checks a position of the support body 13, and performs a feedback control by correcting an error value when the position of the support body 13 is different from a position where the support body 13 is required to be moved.

In addition, the support body 13 is in a shape capable of being rotated while the support body 13 does not have a separate power source. Furthermore, the support body 13 is tapered toward an end portion thereof so that a distal end portion of the support body 13 is sharp, and is brought into contact with and supports a center portion of a second end surface of the worm shaft 60.

Next, the saddle 30 is a place where the worm machining cutter 20 for machining the worm shaft 60 is provided, and includes the worm machining cutter 20 that is mounted such that a cutter blade faces a cutting surface of the worm shaft 60, a B-axis saddle block 33 configured to be tilted around the Y-axis, and a C-axis spindle 31 configured to rotate the worm machining cutter 20 around the Z-axis.

The worm machining cutter 20 is provided on the C-axis spindle 31 configured to be rotated around the Z-axis, and is configured to perform a C-axis rotation. As illustrated in the drawings, the cutter blade is provided in the saddle block 33 such that the cutter blade faces the cutting surface of the worm shaft 60.

Here, the saddle block 33 is formed in an "L" shape. As illustrated in the drawings, a horizontal side of the saddle block 33 is provided in a Y-axis direction, and a lower surface of the horizontal side of the saddle block 33 is provided with the C-axis spindle 31 such that the C-axis spindle 31 faces a lower portion of the horizontal side of the saddle block 33, so that the cutter blade of the worm machining cutter 20 faces the cutting surface of the worm shaft 60.

Here, the shape of the saddle block 33 is not limited to the "L" shape, and any shape in which the worm machining cutter 20 faces the cutting surface of the worm shaft 60 by the saddle block 33 and the worm machining cutter 20 is capable of performing B-axis tilting may be applied as the shape of the saddle block 33.

In addition, a vertical side of the saddle block 33 is provided in the Z-axis direction, and is provided on the column 40. Particularly, the vertical side of the saddle block 33 is provided on the saddle 30 such that the vertical side of the saddle block 33 is capable of being rotated around the Y-axis, i.e., the vertical side of the saddle block 33 is capable of performing the B-axis tilting.

That is, the saddle block 33 is provided on the saddle 30 such that the C-axis spindle 31 is capable of being rotated around the Z-axis and is capable of being tilted around the Y-axis, i.e., the B-axis tilting.

Next, the column 40 is provided such that the saddle 30 is capable of being moved in the Z-axis direction, and a rail is provided on a front surface of the column 40, so that the saddle 30 is capable of being moved in the Z-axis direction along the rail.

A fourth transferring device is provided for the Z-axis movement of the saddle 30 along the rail of the column 40. As illustrated in FIG. 2, the column 40 includes the nut 61 connected to the saddle 30, the ball screw 62 connected to the nut 61 and configured such that the saddle 30 is moved along the Z-axis, the motor 63 configured to drive the ball screw 62, the coupling 65 connecting the ball screw 62 and the motor 63 to each other, and the encoder 64 and the linear scale 67 configured to measure a movement displacement of the saddle 30 so as to realize precise control.

Here, similar to the first transferring device described above, the configuration of the fourth transferring device is not limited to the configuration illustrated in FIG. 2.

Next, the bed 50 is provided on a lower portion of each of the X-axis table 10 and the column 40, so that the X-axis table 10 is capable of being moved in the X-axis direction and the column 40 is capable of being moved in the Y-axis direction.

That is, the bed 50 has an upper portion provided with a rail in the X-axis direction so that the X-axis movement of the X-axis table 10 is capable of being performed, and has an upper portion provided with a rail in the Y-axis direction so that the Y-axis movement of the column 40 is capable of being performed.

To this end, a second transferring device is provided. As illustrated in FIG. 2, the bed 50 includes the nut 61 connected to the X-axis table 10, the ball screw 62 connected to the nut 61 and configured such that the X-axis table 10 is moved along the X-axis, the motor 63 configured to drive the ball screw 62, the coupling 65 connecting the ball screw 62 and the motor 63 to each other, and the encoder 64 and the linear scale 67 configured to measure a movement displacement of the X-axis table 10 so as to realize precise control.

Here, similar to the first transferring device described above, the configuration of the second transferring device is not limited to the configuration illustrated in FIG. 2.

In addition, the bed 50 is provided with a third transferring device connected to the column 40, and such a third transferring device includes the nut 61, the ball screw 62 connected to the nut 61 and configured such that the column 40 is moved along the Y-axis, the motor 63 configured to drive the ball screw 62, the coupling 65 connecting the ball screw 62 and the motor 63 to each other, and the encoder 64 and the linear scale 67 configured to measure a movement displacement of the column 40 so as to realize precise control.

Here, similar to the first transferring device described above, the configuration of the third transferring device is not limited to the configuration illustrated in FIG. 2.

Hereinafter, a method for machining a worm shaft by using the apparatus for machining the worm shaft of the double enveloping worm gear according to the present disclosure will be described.

The apparatus for machining the worm shaft of the double enveloping worm gear according to the present disclosure may perform machining differently according to a situation in which the teeth number of the worm machining cutter is equal to the teeth number of the worm wheel and a situation in which the teeth number of the worm machining cutter is smaller than the teeth number of the worm wheel.

First, the method for machining the worm shaft of the double enveloping worm gear according to the present disclosure in the situation in which the teeth number of the worm machining cutter is equal to the teeth number of the worm wheel will be described.

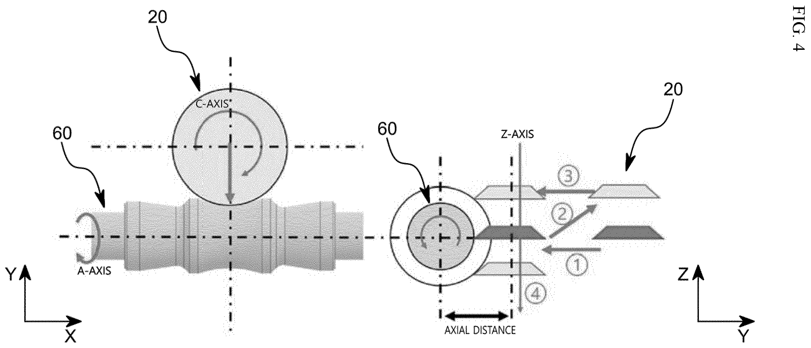

FIG. 3 is a cross-sectional view illustrating a worm shaft and a worm machining cutter when the teeth number of the worm machining cutter is equal to the teeth number of a worm wheel in the apparatus for machining the worm shaft of the double enveloping worm gear according to an exemplary embodiment of the present disclosure, and FIG. 4 is a view illustrating a machining progress state in FIG. 3.

That is, referring to FIG. 3, a situation in which the worm shaft 60 is machined by the worm machining cutter 20 having a size equal to a size of the worm wheel in the worm gear formed of the worm shaft 60 and the worm wheel is illustrated.

In the drawing, a tip diameter is a tooth end diameter of the worm machining cutter 20, a root diameter is a core diameter of the worm shaft 60, and an axial distance is a distance between the center of the worm wheel and the center of the worm shaft 60, i.e., a distance between the center of the worm machining cutter 20 and the center of the worm shaft 60.

Referring to FIG. 1 to FIG. 4, first, the worm shaft 60 and the worm machining cutter 20 are rotated as the A-axis spindle 11 and the C-axis spindle 31 are rotated at a speed ratio determined according to the teeth number of the worm machining cutter 20 and the teeth number of the worm wheel.

Then, as shown in the number 1 in FIG. 4, the column 40 is moved forward in the Y-axis direction so that the worm machining cutter 20 enters the worm shaft 60, the tip diameter of the worm machining cutter 20 enters up to the root diameter of the worm shaft 60, and machining is started.

Next, the column 40 is moved backward in the Y-axis direction and the saddle 30 is moved upward in the Z-axis direction, so that the worm machining cutter 20 is moved backward and upward as shown in the number 2 in FIG. 4. That is, the worm machining cutter 20 is moved backward and upward diagonally.

Then, the column 40 enters in the Y-axis direction again so that the worm machining cutter 20 enters the worm shaft 60 as shown in the number 3 in FIG. 4, and machining is performed.

Next, the saddle 30 is moved downward in the Z-axis direction so that the worm machining cutter 20 is moved downward as shown in the number 4 in FIG. 4, and machining of the worm shaft 60 is performed.

As such, the worm shaft 60 and the worm machining cutter 20 are rotated, the worm machining cutter 20 is moved forward in the Y-axis direction, so that machining is started. Then, after the worm machining cutter 20 is moved backward and upward in a diagonal direction, the worm machining cutter 20 is moved forward in the Y-axis direction again and is moved downward in the Z-axis direction, so that machining of the worm shaft 60 is performed.

Here, the operation in which the worm machining cutter 20 is moved downward in the Z-axis direction is performed for machining the worm shaft 60 and for plunging and removing an unmachined region simultaneously.

That is, through the plunging operation, a removal of burrs generated according to the machining process according to the present disclosure may be facilitated, and the machining may be performed without an unmachined region.

In addition, tilting of the saddle block 33 may be performed around the B-axis, and a lead angle may be formed on the worm shaft 60 through the tilting operation of the saddle block 33.

That is, as shown in the number 1 in FIG. 4, when the worm machining cutter 20 enters, the saddle block 33 performs tilting by the lead angle desired to be machined on the worm shaft 60. Then, when machining of the worm shaft 60 is performed by entering the worm machining cutter 20, machining may be performed as the lead angle is formed on the worm shaft 60.

Here, the tilting operation of the saddle block 33 may be omitted, which involves forming the cutter blade of the worm machining cutter 20 at an angle equivalent to the lead angle and machining of the worm shaft 60 is performed.

In such a situation, machining may be performed while the lead angle is formed on the worm shaft 60 without performing the tilting operation of the saddle block 33.

In addition, when the teeth number of the worm machining cutter 20 and the teeth number of the worm wheel are the same, the X-axis direction movement of the X-axis table 10 is not performed.

Meanwhile, the method for machining the worm shaft of the double enveloping worm gear according to the present disclosure in the situation in which the teeth number of the worm machining cutter is smaller than the teeth number of the worm wheel will be described.

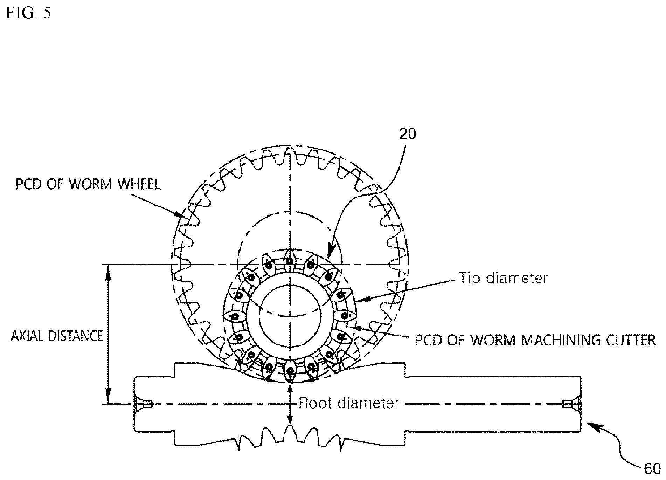

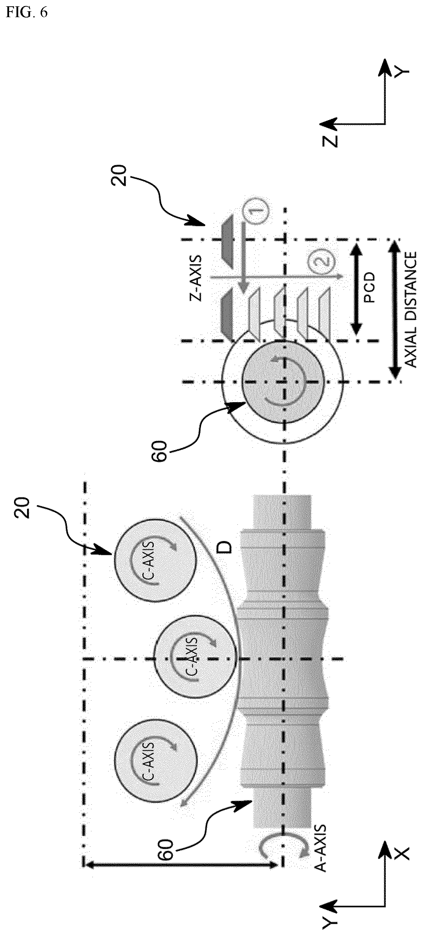

FIG. 5 is a cross-sectional view illustrating the worm shaft and the worm machining cutter when the teeth number of the worm machining cutter is smaller than the teeth number of the worm wheel in the apparatus for machining the worm shaft of the double enveloping worm gear according to an exemplary embodiment of the present disclosure, and FIG. 6 is a view illustrating a machining progress state in FIG. 5.

That is, referring to FIG. 5, a situation in which the worm shaft 60 is machined by the worm machining cutter 20 having a size smaller than a size of the worm wheel in the worm gear formed of the worm shaft 60 and the worm wheel is illustrated.

In the drawings, a PCD is a pitch circle diameter, and a transferring path of the worm machining cutter 20 may be determined by using the PCD of the worm wheel and the PCD of the worm machining cutter 20.

That is, when the teeth number of the worm machining cutter 20 is smaller than the teeth number of the worm wheel, the worm machining cutter 20 is required to be transferred according to a circular arc along the cutting surface of the worm shaft 60 in addition to the forward and backward movement and the upward and downward movement of the worm machining cutter 20. When the worm machining cutter 20 is transferred along the circular arc, the worm machining cutter 20 is transferred along the circular arc formed along the center of the PCD of the worm wheel and the center of the PCD of the worm machining cutter 20.

Referring to FIG. 1, FIG. 5, and FIG. 6, first, the worm shaft 60 and the worm machining cutter 20 are rotated as the A-axis spindle 11 and the C-axis spindle 31 are rotated at a speed ratio determined according to the teeth number of the worm machining cutter 20 and the teeth number of the worm wheel.

Then, as shown in the number 1 in FIG. 6, the column 40 is moved forward in the Y-axis direction so that the worm machining cutter 20 enters the worm shaft 60, the tip diameter of the worm machining cutter 20 enters up to the root diameter of the worm shaft 60, and machining is started.

That is, the worm machining cutter 20 enters up to a point where the PCD of the worm wheel and the PCD of the worm machining cutter 20 are in contact with each other.

At the same time, as the X-axis table 10 is moved in the X-axis direction, the worm shaft 60 is moved in the X-axis direction, and the worm machining cutter 20 is transferred along a circular arc formed along the center of the PCD of the worm wheel and the center of the PCD of the worm machining cutter 20, so that machining is performed.

Transferring of such a worm machining cutter 20 is shown as the arrow D in FIG. 6.

As such, the X-axis movement of the X-axis table 10, the Y-axis movement of the worm machining cutter 20, the A-axis rotation of the worm shaft 60, and the C-axis rotation of the worm machining cutter 20 are performed simultaneously.

Next, the saddle 30 is moved downward in the Z-axis direction, and machining of the worm shaft 60 is performed as the worm machining cutter 20 is moved downward as shown in the number 2 in FIG. 6.

Here, the operation in which the worm machining cutter 20 is moved downward in the Z-axis direction is performed for machining the worm shaft 60 and for plunging and removing an unmachined region simultaneously.

In addition, a lead angle may be formed on the worm shaft 60 through the tilting operation of the saddle block 33 around the B-axis. Otherwise, the cutter blade of the worm machining cutter 20 is formed such that the cutter blade has an angle equivalent to the lead angle, and machining of the worm shaft 60 is performed, so that the lead angle may be formed on the worm shaft 60 without performing the tilting operation of the saddle block 33.

In addition, a transferring direction of the worm machining cutter 20 may be performed in a direction opposite to the arrow D.

Although the embodiments of the present disclosure have been disclosed for illustrative purposes, those skilled in the art will appreciate that various modifications, additions and substitutions are possible, without departing from the scope and spirit of the present disclosure. As described above, the embodiments and the accompanying drawings disclosed in the present disclosure are provided for describing the present disclosure and are not intended to limit the technical ideas of the present disclosure. The technical ideas of the present disclosure are not limited to the embodiments and the drawings. The scope of the present disclosure should be construed as being covered by the scope of the appended claims, and all technical ideas falling within the scope of the claims should be construed as being included in the scope of the present disclosure.

## Claims

1. An apparatus for machining a worm shaft of a double enveloping worm gear formed of a worm wheel and the worm shaft having an hourglass shape, the apparatus comprising:
an X-axis table provided with an A-axis spindle configured to rotate the worm shaft around an X-axis that is a longitudinal direction of the A-axis spindle, the X-axis table being provided with a support body being capable of being moved along an X-axis direction according to a length of the worm shaft;
a saddle which comprises a worm machining cutter mounted such that a cutter blade faces a cutting surface of the worm shaft and which comprises a C-axis spindle configured to rotate the worm machining cutter around a Z-axis;
a column provided such that a Z-axis direction movement of the saddle is capable of being realized; and
a bed provided on a lower portion of each of the X-axis table and the column, the bed being provided such that an X-axis direction movement of the X-axis table and a Y-axis direction movement of the column are capable of being realized,
wherein, in a situation in which a teeth number of the worm machining cutter is equal to a teeth number of the worm wheel,
when the worm shaft and the worm machining cutter are rotated as the A-axis spindle and the C-axis spindle are rotated at a speed ratio determined according to a ratio of the teeth number of the worm machining cutter and the teeth number of the worm wheel,
the column is moved forward in a Y-axis direction so that the worm machining cutter enters the worm shaft, and a tip diameter of the worm machining cutter enters up to a root diameter of the worm shaft, so that machining is started,
the worm machining cutter is moved backward and upward as the column is moved backward in the Y-axis direction and the saddle is moved upward in a Z-axis direction,
the worm machining cutter enters the worm shaft as the column is moved forward again in the Y-axis direction, and then
machining of the worm shaft is performed as the saddle is moved downward in the Z-axis direction and the worm machining cutter is moved downward.

2. The apparatus of claim 1, wherein the saddle further comprises a B-axis saddle block configured to be tilted around a Y-axis.

3. An apparatus for machining a worm shaft of a double enveloping worm gear formed of a worm wheel and the worm shaft having an hourglass shape, the apparatus comprising:
an X-axis table provided with an A-axis spindle configured to rotate the worm shaft around an X-axis that is a longitudinal direction of the A-axis spindle, the X-axis table being provided with a support body being capable of being moved along an X-axis direction according to a length of the worm shaft;
a saddle comprising a worm machining cutter mounted such that a cutter blade faces a cutting surface of the worm shaft, a C-axis spindle configured to rotate the worm machining cutter around a Z-axis, and a saddle block configured to be tilted around a Y-axis;
a column provided such that a Z-axis direction movement of the saddle is capable of being realized; and
a bed provided on a lower portion of each of the X-axis table and the column, the bed being provided such that an X-axis direction movement of the X-axis table and a Y-axis direction movement of the column are capable of being realized,
wherein, in a situation in which a teeth number of the worm machining cutter is smaller than a teeth number of the worm wheel,
when the worm shaft and the worm machining cutter are rotated as the A-axis spindle and the C-axis spindle are rotated at a speed ratio determined according to a ratio of the teeth number of the worm machining cutter and the teeth number of the worm wheel,
the column is moved forward in a Y-axis direction so that the worm machining cutter enters the worm shaft, and a tip diameter of the worm machining cutter enters up to a root diameter of the worm shaft, so that machining is started,
the worm shaft is moved along an X-axis at the same time as the X-axis table is moved along an X-axis direction, and the worm machining cutter is transferred along a circular arc formed along a center of a Pitch Circle Diameter (PCD) of the worm wheel and a center of a Pitch Circle Diameter (PCD) of the worm machining cutter, so that machining is performed, and
machining of the worm shaft is performed as the saddle is moved downward in a Z-axis direction and the worm machining cutter is moved downward, and
wherein a rotation direction of the worm machining cutter and a transferring direction of the worm machining cutter may be the same direction or directions opposite to each other.

4. The apparatus of claim 1 or claim 3, wherein the X-axis table comprises:
a first transferring device connected to the support body and configured to move the support body along the X-axis; and
a first encoder and a first linear scale that are capable of precisely controlling a movement of the support body.

5. The apparatus of claim 1 or claim 3, wherein the bed comprises:
a second transferring device connected to the X-axis table and configured to move the X-axis table along the X-axis;
a second encoder and a second linear scale that are capable of precisely controlling a movement of the X-axis table;
a third transferring device connected to the column and configured to move the column along the Y-axis; and
a third encoder and a third linear scale that are capable of precisely controlling a movement of the column.

6. The apparatus of claim 1 or claim 3, wherein the column comprises:
a fourth transferring device connected to the saddle and configured to move the saddle along the Z-axis; and
a fourth encoder and a fourth linear scale that are capable of precisely controlling a movement of the saddle.

7. A method for machining a worm shaft by using the apparatus for machining the worm shaft of the double enveloping worm gear described in claim 1, the method comprising:
rotating the worm shaft and the worm machining cutter as the A-axis spindle and the C-axis spindle are rotated at a speed ratio determined according to a ratio of a teeth number of the worm machining cutter and a teeth number of the worm wheel;
starting machining as the column is moved forward in a Y-axis direction so that the worm machining cutter enters the worm shaft and a tip diameter of the worm machining cutter enters up to a root diameter of the worm shaft;
moving the worm machining cutter backward and upward as the column is moved backward in the Y-axis direction and the saddle is moved upward in a Z-axis direction;
progressing the machining as the column is moved forward again in the Y-axis direction and the worm machining cutter enters the worm shaft; and
progressing the machining as the saddle is moved downward in the Z-axis direction and the worm machining cutter is moved downward.

8. A method for machining a worm shaft by using the apparatus for machining the worm shaft of the double enveloping worm gear described in claim 3, the method comprising:
rotating the worm shaft and the worm machining cutter as the A-axis spindle and the C-axis spindle are rotated at a speed ratio determined according to a ratio of a teeth number of the worm machining cutter and a teeth number of the worm wheel;
starting machining as the column is moved forward in a Y-axis direction so that the worm machining cutter enters the worm shaft and a tip diameter of the worm machining cutter enters up to a root diameter of the worm shaft;
progressing the machining as the X-axis table is moved in an X-axis direction and the worm shaft is moved along an X-axis so that the worm machining cutter is transferred along a circular arc formed along a center of a Pitch Circle Diameter (PCD) of the worm wheel and a center of a Pitch Circle Diameter (PCD) of the worm machining cutter; and
progressing the machining as the column is moved downward in the Z-axis direction and the worm machining cutter is moved downward.
